# EUROPEAN PATENT SPECIFICATION

(11) **EP 2 844 354 B1**
(45) Date of publication and mention of the grant of the patent: **12.06.2019**
(21) Application number: 13724928.0
(22) Date of filing: 16.04.2013
(51) Int. Cl.: A62B 35/04, F16F 7/00

(54) **ENERGY ABSORBER**
ENERGIEABSORBER
ABSORBEUR D'ÉNERGIE

(30) Priority: 04.05.2012 US 201213463986
(43) Date of publication of application: 11.03.2015
(60) Divisional application: 19158841.7
(73) Proprietor: D B Industries, LLC, Maplewood, MN55144-1000 (US)
(72) Inventor: PERNER, Judd J., St. Paul, MN 55133-3427 (US)
(74) Representative: Herzog, Fiesser & Partner Patentanwälte PartG mbB
(86) International application number: PCT/US2013/036759
(87) International publication number: WO 2013/165685

(56) References cited:
- WO-A2-95/01815
- DE-U1- 9 316 676
- US-A- 5 174 410
- US-B1- 7 392 881
- US-B2- 7 726 350

## Description

### BACKGROUND

To protect workers that have to work at heights, lifelines coupled to safety harnesses donned by a worker are often required. If a fall event occurs, the lifeline (coupled to a support structure) limits the fall of the worker. A worker can be subject to injury even with the use of a lifeline system if a fall distance before the lifeline becomes taut is significant. Energy absorbers have been added to lifeline systems to provide a less abrupt stop when the lifeline becomes taut therein lessening the possibility of injuries. An energy absorber works by absorbing the some kinetic energy of the falling body (i.e. the kinetic energy of the falling worker). Various types of energy absorbers have been implemented in the past such as spring type arrangements and deforming metal arrangements. However, these types of arrangements tend to be bulky and relatively heavy.

For the reasons stated above and for other reasons stated below which will become apparent to those skilled in the art upon reading and understanding the present specification, there is a need in the art for an effective, efficient and compact energy absorber.

US-A-7392881 discloses a multiple stage personal fall arrest energy absorber. According to a preferred example of the invention the shock absorber is formed from two straps, each having a leading end, a mid-portion, and a trailing portion. The two straps are conjoined to one another along an energy absorbing area and to a backup strap such that the pulling of the leading ends of the two straps away from one another first produces tearing from the leading ends towards the mid-portion, and then the tearing would progress simultaneously from the trailing end towards the mid-portion and from the leading end towards the mid-portion, so that in the second phase the shock absorber simultaneously tears along two locations, and thus the attachment area between the two straps, will first tear in one direction, providing one level of arrest force, and then after a predetermined length from both directions, providing a higher level of arrest force.

US-A-2009114307, also published as US 7 726 350 B2, discloses a tear-away energy absorbing webbing which has a top layer load-bearing web and a bottom layer load-bearing web. An energy absorbing portion of the webbing has binder yarns interlaced with the top and bottom layer load-bearing webs. A sufficiently high load force applied to the webbing breaks the binder yarns and tears apart the top and bottom layer load-bearing webs. The energy absorbing portion absorbs energy as it tears apart. The top and bottom layer load-bearing webs support the load force when the shock absorbing portion is torn apart. During activation of the webbing, the binder yarns begin fracturing at the opposite ends. As the webbing is activated (torn apart), the binder yarns fracture from the end, along the binder yarn pattern, to the center. The number of binder yarns interlocking the top and bottom layer load-bearing webs increases from the end to the center. The increase in the number of interlocking binder yarns increases the number of binder yarns which must be fractured and thus, increases the activation force required to tear apart the top and bottom layer load-bearing webs. The amount of energy absorbed by the webbing increases as the tearing action progresses.

### SUMMARY OF INVENTION

The above-mentioned problems of current systems are addressed by embodiments of the present invention and will be understood by reading and studying the following specification. The following summary is made by way of example and not by way of limitation. It is merely provided to aid the reader in understanding some of the aspects of the invention.

In one embodiment, an energy absorber system is provided. The energy absorber system includes first and second strips of webbing. The first strip of webbing has a first end portion, a second end portion and a mid section between the first end portion and the second end portion. The second strip of webbing has a first end portion, a second end portion and a mid section between the first end portion and the second end portion. A plurality of tear yarns couple the mid sections of the first and second strips of webbing to form a centrally located mid portion of the first and second strips of webbing. The energy absorber system further
includes. a first connection member and a second connection member. The first end portion of the first strip of webbing and the second end portion of the second strip of webbing are coupled to the first connection member. The first end portion of the second strip a webbing and the second end portion of the first strip of webbing are coupled to the second connection member, such that when the first and second connections members are pulled away from each other during a fall event the tear yarns holding the mid portion of the first and second strips of webbing are tom generally simultaneously from opposite ends of the mid portion of the first and second strips therein absorbing energy until the first and second strips of the webbing are separated. The mid portion includes a centrally located unattached section without tear yarns as well as first and second transition ramp down sections that respectfully lead into the centrally unattached section.

### BRIEF DESCRIPTION OF THE DRAWINGS

The present invention can be more easily understood and further advantages and uses thereof will be more readily apparent, when considered in view of the detailed description and the following figures in which:
Figure 1 is a side view of an energy absorber system of one embodiment of the present invention;
Figure 2 is a side perspective view of the energy absorber system of Figure 1;
Figure 3A is a side view of an energy absorber of one embodiment of the present invention prior to a fall event;
Figure 3B is a side view of an energy absorber of Figure 3A during a fall event; and
Figure 3C is a side view of the energy absorber of Figure 3A after a fall event has occurred.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the claims and equivalents thereof.

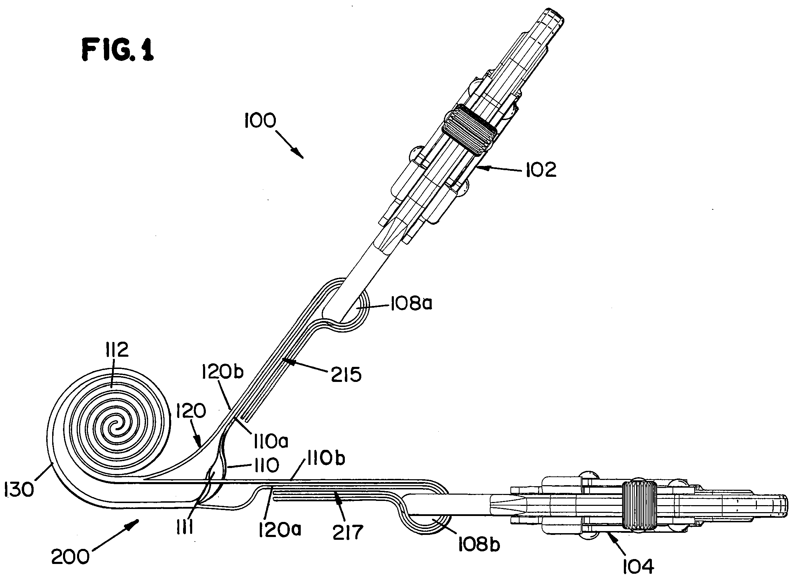

Embodiments of the present invention provide an energy absorber system 100 that is effective and relatively compact. Moreover, Embodiments of the present invention provide an energy absorber without the need for an additional back strap as discussed below. Referring to Figure 1 an embodiment of an energy absorber system 100 is illustrated. The energy absorber system 100 includes a first snap hook 102 (first connector) and a second snap hook 104 (second connector). It will be understood that any type of connector can be used and the present invention is not limited to snap hooks. Coupled between the snap hooks is an energy absorber 200. In use, the energy absorber system 100 is coupled between a safety harness donned by a user and a lanyard by the snap hooks 102 and 104. The lanyard would then in turn be coupled to a support structure. If a fall event occurred, the snap hooks 102 and 104 would be pulled away from each other while the energy absorber 200 absorbs energy as further described below. The energy absorber 200 includes a first strip of webbing 110 and a second strip of webbing 120.

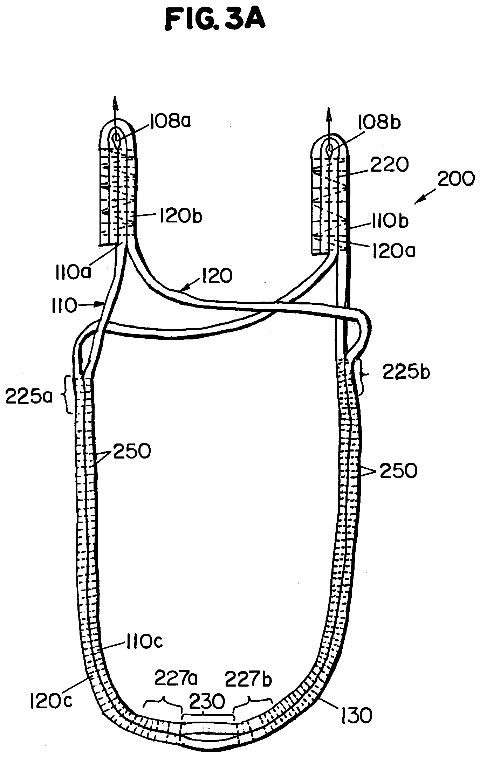

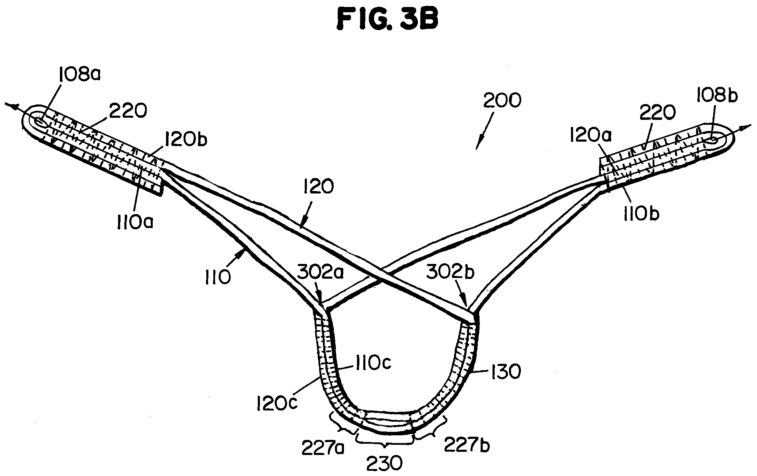

The first strip of webbing 110 and the second strip 120 of webbing are woven together with tear yarns as shown in Figures 3A and 3B. The first strip of webbing 110 and the second strip a webbing 120 can be referred to as tear webbing. An example of tear yarns used to couple the strips of webbing 110 and 120 together are polyester tear yarns 250. An example of a company that manufacturers tear yarns is the Sturges Manufacturing, Inc. Company of Utica, New York. The first strip of webbing 110 and the second strip of webbing 120 in embodiments each include a centrally located mid section 110c and 120c (illustrated in Figure 3A). The centrally located mid sections 110c and 120c of the first and second strips of webbing 110 and 120 are woven together by tear yarns 250 to form a mid portion 130 of the first and second strips of webbing 110 and 120. The tear yarns 250 couple the first and second strips of webbing 110 and 120 together. The first and second strips of webbing 110 and 120 have opposed end portions 110a, 110b, 120a and 102b which are not held together by the tear yarns 250. In one embodiment the first and second strips of webbing 110 and 120 are made from Vectran. In other embodiments, other types of high strength fibers are used for the strips of webbing 110 and 120 such as, but not limited to, Dyneema, Spectra, etc. Typically, lower strength fibers of a different material is used for the tear yarns 250 such as, but not limited to, polyester fibers. The use of dissimilar materials between the strips of webbing 110 and 120 and the tear yarns 250 allows the energy absorbing material to exhibit high strength in a small amount of space. Also, because the fibers in the strips of webbing 110 and 120 are much stronger than the fibers of the tear yarns 250, the fibers in the strips of webbing 110 and 120 are not damaged as the tear yarns 250 are broken.

Referring back to Figure 1, the respective end portions (first webbing first end portion 110a, first webbing second end portion 110b, second webbing first end portion 120a and the second webbing second end portion 120b) of the first and second strips of webbing 110 and 120 are strategically coupled to the associated snap hooks 102 and 104. In particular, the first end portion 110a of the first strip of webbing 110 is coupled to the first snap hook 102. Also coupled to the first snap hook 102 is the second end portion 120b of the second strip of webbing 120. The second end portion 110b of the first strip of webbing 110 and the first end portion 120a of the second strip of webbing 120 are attached to the second snap hook 104. As illustrated in Figure 1, the first strip of webbing 110 in this embodiment includes a twist 111 so that the straps 110 and 102 can be passed by each other. The twist 111 however is not limited to the first strip of webbing 110. Hence, in another embodiment, the second strip of webbing 120 would include the twist 111. As further illustrated in Figure 1, the mid portion 130 of the energy absorber 200 in this embodiment is in a coiled configuration to form a coil of woven webbing 112. This configuration reduces the overall sized of the energy absorber 200 during non-use. In other embodiments, the mid portion 130 is folded instead of coiled during non-use.

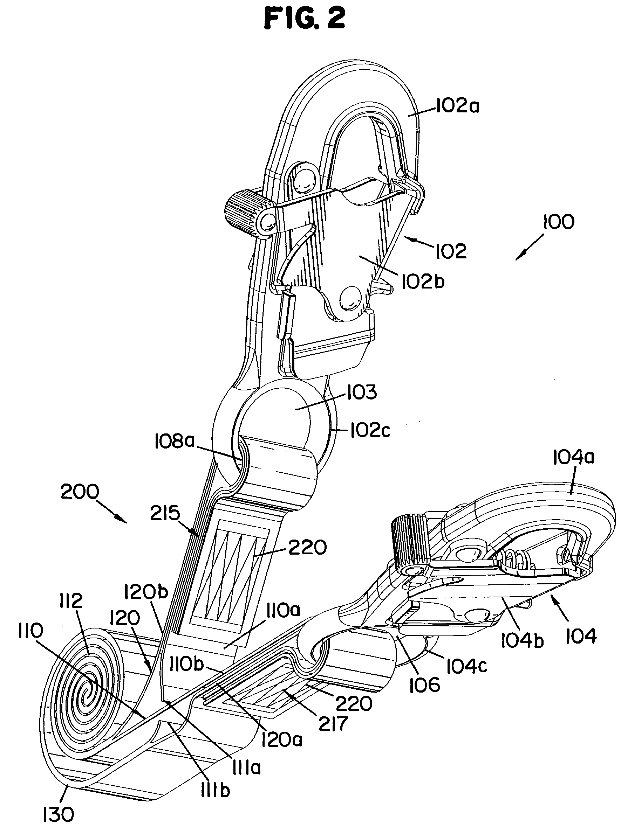

Figure 2 further illustrates the energy absorber system 100. In this Figure, the twist 111 is not illustrated. The first strip of webbing 110 is shown in Figure 2 as being disconnected at ends 111a and 111b for illustration purposes only. It will be understood that the ends 111a and 111b of the webbing are connected in a twist or bend 111 as shown in Figure 1. As further illustrated, the first end portion 110a of the first strip of webbing 110 and the second end portion 120b of the second strip of webbing 120 are passed through a first connection aperture 103 of the first snap hook 102 and folder over on themselves to form a first connector portion 215. They are then attached by attaching stitching 220 to couple the strips of webbing 110 and 120 to the first snap hook 102. The second end portion 110b of the first strip of webbing 110 and the first end portion 120a of the second strip of webbing 120 are passed through a second connection aperture 106 of the second snap hook 104 and folder over on themselves to form a second connector portion 217. They are then attached by attaching stitching 220 that couples the strips of webbing 110 and 120 to the second snap hook 104. As illustrated in Figure 1, the respective folder over portions of the end portions 110a, 120b and 110b and 120a form connector loops 108a and 108b in which the respective connectors 102 and 104 are received.

The snap hooks illustrated in Figure 2 include respective hook body portions 102a and 104a, locking gates 102b and 104b and connection portions 102c and 104c. The connection portions 102c and 104c include the respective connection apertures 103 and 106. As discussed above, although snap hooks 102 and 104 are shown it will be understood that any type of connector can be used that can be coupled to the connector loops 108a and 108b of the strips of webbing 110 and 120. In a typical application as discussed above, the snap hooks 102 and 104 would be used to couple the energy absorber system 100 between a safety harness donned by a worker and a lanyard coupled to a support structure.

Referring to Figure 3A an illustration of the energy absorber 200 of one embodiment in an inactivated state is illustrated. In this illustration, the energy absorber 200 is shown not having its mid portion 130 in a coil for illustration purposes. Figure 3A further shows the arrangement of the strips of webbing 110 and 120. In particular Figure 3A illustrates the positioning of the respective end portions 110a, 120b and 110b, 120a of the strips of webbing 110 and 120 and the positioning of the centrally located mid portion 130. As illustrated, the centrally located mid portion 130 of the webbing strips 110 and 120 are held together by the tear yarns 250. In one embodiment, the mid portion 130 of the webbing strips 110 and 120 includes first and second ramp up transition sections 225a and 225b that are located proximate the respective beginning areas of the mid portion 130. The ramp up transition sections 225a and 225b provide ramp up tear strengths so that when a fall event occurs, the mid portion 130 of the webbing strips 110 and 120 starts pulling apart from each other relatively easily due to a relatively low tear strength and then transitions to a higher desired tear strength. This prevents webbing shock (from going from no tear yarns ((i.e. no tear strength)) to the desired tear strength) from damaging the webbing sections 110 and 120. The transition sections 225a and 225b can be achieved by varying one of the densities of tear yarns, the tear yarn material used and the diameter of the tear yarns.

In the embodiment of the energy absorber 200 of Figure 3A, the mid portion 130 further includes a centrally located unattached section 230. In the centrally unattached section 230, the first and second strips of webbing 110 and 120 are not attached by tear yarns. In one embodiment, the centrally unattached section 230 of the mid portion 130 is approximately 101.6 mm (4 inches). The centrally unattached section 230 prevents the strips of webbing 110 and 120 from binding up (knotting up) on each other. This unintentional binding of the strips of webbing 110 and 120 can occur due to the twist 111 (discussed above) in webbing 110 as the strips of webbing 110 and 120 become separated. This binding of the strips of webbing 110 and 120 can damage the overall strength of the strips of webbing 110 and 120. As discussed above, the strength of the strips of webbing 110 and 120 needs to be maintained since the strips of webbing 110 and 120 double as not only an energy absorber but as back straps. Hence, the centrally unattached section 230 prevents the twist 111 from binding the unattached strips of webbing 110 and 120 together upon conclusion of a fall event.

The mid portion 130 of embodiment of 3A further includes first and second transition ramp down sections 227a and 227b that respectfully lead into the centrally unattached section 230. The first and second transition ramp down sections 227a and 227b transition from the desired tear strength of the mid portion 130 to no tear strength of the centrally unattached section 230. This prevents an instantaneous webbing shock in the strips of webbing 110 and 120 as the strips of webbing 110 and 120 become separated. This webbing shock could damage the overall strength of the strips of webbing 110 and 120. As pointed out above, the overall strength of the strips of webbing 110 and 120 should be preserved since the strips of webbing 110 and 120 are used as back straps. In one embodiment, the first and second transition ramp down sections 227a and 227b are approximately 25.4 mm (1 inch) in length.

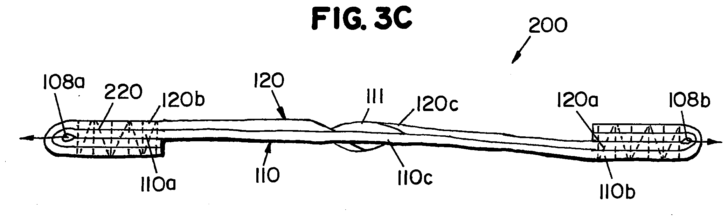

Figure 3B illustrates the energy absorber 200 during a fall event. During a fall event the end portions 110a, 120b and 110b, 120a respectfully are pulled apart from each other as illustrated. As they are pulled apart from each other the tear yarns 250 are broken along separating areas 302a and 302b. Hence in this embodiment, the mid portion 130 of the strips of webbing 110 and 120 are pulled away from each other at two locations 302a and 302b generally simultaneously. The energy absorber 200 continues to absorb energy until the mid-portion 130 of the strips of webbing 110 and 120 are fully separated from each other. This is shown in Figure 3C. As illustrated in Figure 3C, the mid portion 130 of the straps of webbing 110 and 120 are not connected. However, because of the coupling configuration, the strips of webbing 120 and 110 remain coupled between connector loops 108a and 108b. Hence, a traditional back strap required in a typical energy absorbing system is not needed with the embodiments of the present invention. In embodiments, the configuration will retain the strength necessary for tensile requirements post development. For example, in one embodiment, the strips of webbing provide a tensile strength of 3,856 kg (8,500 lbs). Moreover, the dual straps of webbing 110 and 120 provide an additional back strap over a typical system to provide an added safety feature. Hence, even if one of the straps of webbing 110 and 120 fails during a fall event, the other strap will still provide the back strap function which is to retain a connection between a lanyard and a safety harness donned by the worker after the energy absorber is spent.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims.

## Claims

1. An energy absorber system comprising:
a first strip of webbing (110) having a first end portion (110a), a second end portion (110b) and a mid section (110c) between the first end portion and the second end portion;
a second strip of webbing (120) having a first end portion (120a), a second end portion (120b) and a mid section (120c) between the first end portion and the second end portion;
a plurality of tear yarns (250) coupling the mid sections 110c, 120c) of the first and second strips of webbing to form a centrally located mid portion (130) of the first and second strips of webbing;
a first connection member (102), the first end portion (110a) of the first strip of webbing (110) and the second end portion (120b) of the second strip of webbing (120) coupled to the first connection member; and
a second connection member (104), the first end portion (120a) of the second strip of webbing (120) and the second end portion (110b) of the first strip of webbing (110) coupled to the second connection member, such that when the first and second connection members (102,
104) are pulled away from each other during a fall event the tear yarns (250) holding the mid portion (130) of the first and second strips of webbing (110, 120) are torn generally simultaneously from opposite ends of the mid portion (130) of the first and second strips therein absorbing energy until the first and second strips of the webbing are separated; **characterized in that** the mid portion (130) includes an unattached section (230) without tear yarns located at a centrally located portion of the mid portion and that the mid portion further includes first and second transition ramp down sections (227a, 227b), each having a tear yarn arrangement that produces transition tear strength sections that respectfully lead into the centrally located unattached section (230).

2. The energy absorber system of claim 1, further comprising:
the first strip of webbing (110) including a twist (111).

3. The energy absorber system of claim 1, further comprising:
the mid portion (130) of the first and second strip of webbing rolled into a coil.

4. The energy absorber system of claim 1, further comprising:
a first stitching area (220) configured to couple the first end portion (110a) of the first strip of webbing (110) and the second end portion (120b) of the second strip of webbing (120) to the first connection member (102); and
a second stitching area (220) configured to couple the first end portion (120a) of the second strip (120) of webbing and the second end portion (110b) of the first strip of webbing (110) to the second connection member (104).

5. The energy absorber system of claim 1, further comprising:
the first connection member (102) having a first connection aperture (103), the first end portion (110a) of the first strip of webbing (110) and the second end portion (120b) of the second strip of webbing (120) passing through the first connector aperture of the first connection member; and
the second connection member (104) having a second connection aperture (106), the second end portion (110b) of the first strip of webbing (110) and the first end portion (120a) of the second strip of webbing (120) passing through the second connector aperture of the second connection member.

6. The energy absorber system of claim 1, wherein the first and second connection members (102, 104) are snap hooks.

7. The energy absorber of claim 1, wherein the transition tear strength sections (227a, 227b) transition from a higher tear strength to a lower tear strength as the transition tear strength sections near the centrally located unattached section (230).

8. The energy absorber of claim 1, the mid portion of the first and second strips (110, 120) further including a pair of ramp up sections (225a, 225b) having a tear yarn arrangement that produces transition tear strength sections proximate opposed ends of the mid portion (130) of the first and second strips of webbing.

9. The energy absorber of claim 8, wherein the transition tear strength sections (225a, 225b) transition from a lower tear strength to a higher tear strength.

## Patentansprüche

1. Energieabsorbersystem, umfassend:
einen ersten Bandstreifen (110) mit einem ersten Endabschnitt (110a), einem zweiten Endabschnitt (110b) und einem Mittelteil (110c) zwischen dem ersten Endabschnitt und dem zweiten Endabschnitt;
einen zweiten Bandstreifen (120) mit einem ersten Endabschnitt (120a), einem zweiten Endabschnitt (120b) und einem Mittelteil (120c) zwischen dem ersten Endabschnitt und dem zweiten Endabschnitt;
eine Mehrzahl von Reißgarnen (250), die die Mittelteile 110c, 120c) des ersten und des zweiten Bandstreifens koppeln, um einen zentral angeordneten Mittelabschnitt (130) des ersten und des zweiten Bandstreifens zu bilden;
ein erstes Verbindungselement (102), wobei der erste Endabschnitt (110a) des ersten Bandstreifens (110) und der zweite Endabschnitt (120b) des zweiten Bandstreifens (120) mit dem ersten Verbindungselement gekoppelt sind; und
ein zweites Verbindungselement (104), wobei der erste Endabschnitt (120a) des zweiten Bandstreifens (120) und der zweite Endabschnitt (110b) des ersten Bandstreifens (110) mit dem zweiten Verbindungselement gekoppelt sind, sodass, wenn das erste und das zweite Verbindungselement (102, 104) bei einem Fallereignis voneinander weggezogen werden, die Reißgarne (250), welche den Mittelabschnitt (130) des ersten und des zweiten Bandstreifens (110, 120) halten, im Allgemeinen gleichzeitig von gegenüberliegenden Enden des Mittelabschnitts (130) des ersten und des zweiten Streifens aus zerrissen werden, wodurch Energie absorbiert wird, bis der erste und der zweite Bandstreifen voneinander getrennt sind; **dadurch gekennzeichnet, dass** der Mittelabschnitt (130) einen nicht befestigten Abschnitt (230) ohne Reißfäden einschließt, der an einem zentral angeordneten Abschnitt des Mittelabschnitts angeordnet ist, und **dass** der Mittelabschnitt ferner einen ersten und einen zweiten Übergangsverringerungsabschnitt (227a, 227b) einschließt, die jeweils eine Reißgarnanordnung aufweisen, welche Übergangsreißfestigkeitsabschnitte erzeugen, welche jeweils in den zentral angeordneten, nicht befestigten Abschnitt (230) führen.

2. Energieabsorbersystem nach Anspruch 1, ferner umfassend:
den ersten Bandstreifen (110) einschließlich einer Verdrehung (111).

3. Energieabsorbersystem nach Anspruch 1, ferner umfassend:
den Mittelabschnitt (130) des ersten und zweiten Bandstreifens, aufgerollt zu einer Spule.

4. Energieabsorbersystem nach Anspruch 1, ferner umfassend:
einen ersten Nähbereich (220), der konfiguriert ist, um den ersten Endabschnitt (110a) des ersten Bandstreifens (110) und den zweiten Endabschnitt (120b) des zweiten Bandstreifens (120) mit dem ersten Verbindungselement (102) zu koppeln; und
einen zweiten Nähbereich (220), der konfiguriert ist, um den ersten Endabschnitt (120a) des zweiten Bandstreifens (120) und den zweiten Endabschnitt (110b) des ersten Bandstreifens (110) mit dem zweiten Verbindungselement (104) zu koppeln.

5. Energieabsorbersystem nach Anspruch 1, ferner umfassend:
das erste Verbindungselement (102) mit einer ersten Verbindungsöffnung (103), wobei der erste Endabschnitt (110a) des ersten Bandstreifens (110) und der zweite Endabschnitt (120b) des zweiten Bandstreifens (120) durch die erste Verbindungsöffnung des ersten Verbindungselements verlaufen; und
das zweite Verbindungselement (104) mit einer zweiten Verbindungsöffnung (106), wobei der zweite Endabschnitt (110b) des ersten Bandstreifens (110) und der erste Endabschnitt (120a) des zweiten Bandstreifens (120) durch die zweite Verbindungsöffnung des zweiten Verbindungselements verlaufen.

6. Energieabsorbersystem nach Anspruch 1, wobei das erste und das zweite Verbindungselement (102, 104) Karabinerhaken sind.

7. Energieabsorber nach Anspruch 1, wobei die Übergangsreißfestigkeitsabschnitte (227a, 227b) von einer höheren Reißfestigkeit zu einer niedrigeren Reißfestigkeit übergehen als die Übergangsreißfestigkeitsabschnitte nahe des zentral angeordneten, nicht befestigten Abschnitts (230).

8. Energieabsorber nach Anspruch 1, wobei der Mittelabschnitt des ersten und des zweiten Streifens (110, 120) ferner ein Paar Erhöhungsabschnitte (225a, 225b) mit einer Reißfadenanordnung einschließt, die Übergangsreißfestigkeitsabschnitte nahe gegenüberliegenden Enden des Mittelabschnitts (130) des ersten und des zweiten Bandstreifens erzeugt.

9. Energieabsorber nach Anspruch 8, wobei die Übergangsreißfestigkeitsabschnitte (225a, 225b) von einer niedrigeren Reißfestigkeit zu einer höheren Reißfestigkeit übergehen.

## Revendications

1. Système absorbeur d'énergie comprenant :
une première bande de sangle (110) ayant une première partie d'extrémité (110a), une deuxième partie d'extrémité (110b) et une section intermédiaire (110c) entre la première partie d'extrémité et la deuxième partie d'extrémité ;
une deuxième bande de sangle (120) ayant une première partie d'extrémité (120a), une deuxième partie d'extrémité (120b) et une section intermédiaire (120c) entre la première partie d'extrémité et la deuxième partie d'extrémité ;
une pluralité de fils de déchirure (250) couplant les sections intermédiaires (110c, 120c) des première et deuxième bandes de sangle pour former une partie médiane située en position centrale (130) des première et deuxième bandes de sangle ;
un premier élément de raccordement (102), la première partie d'extrémité (110a) de la première bande de sangle (110) et la deuxième partie d'extrémité (120b) de la deuxième bande de sangle (120) étant couplées au premier élément de raccordement ; et
un deuxième élément de raccordement (104), la première partie d'extrémité (120a) de la deuxième bande de sangle (120) et la deuxième partie d'extrémité (110b) de la première bande de sangle (110) étant couplées au deuxième élément de raccordement, de telle sorte que lorsque les premier et deuxième éléments de raccordement (102, 104) sont tirés à l'écart l'un de l'autre pendant un événement de chute, les fils de déchirure (250) maintenant la partie médiane (130) des première et deuxième bandes de sangle (110, 120) sont déchirés de façon généralement simultanée à partir d'extrémités opposées de la partie médiane (130) des première et deuxième bandes en leur sein, absorbant de l'énergie jusqu'à ce que les première et deuxième bandes du sangle soient séparées ; **caractérisé en ce que** la partie médiane (130) inclut une section non fixée (230) dépourvue de fils de déchirure, située dans une partie située en position centrale de la partie médiane, et **en ce que** la partie médiane inclut en outre des première et deuxième sections de transition à diminution progressive (227a, 227b), ayant chacune un agencement de fils de déchirure qui produit des sections de résistance au déchirement de transition qui mènent respectivement dans la section non fixée située en position centrale (230).

2. Système absorbeur d'énergie selon la revendication 1, comprenant en outre :
la première bande de sangle (110) incluant une torsion (111).

3. Système absorbeur d'énergie selon la revendication 1, comprenant en outre :
la partie médiane (130) des première et deuxième bandes de sangle enroulée en une bobine.

4. Système absorbeur d'énergie selon la revendication 1, comprenant en outre :
une première zone de couture (220) configurée pour coupler la première partie d'extrémité (110a) de la première bande de sangle (110) et la deuxième partie d'extrémité (120b) de la deuxième bande de sangle (120) au premier élément de raccordement (102) ; et
une deuxième zone de couture (220) configurée pour coupler la première partie d'extrémité (120a) de la deuxième bande (120) de sangle et la deuxième partie d'extrémité (110b) de la première bande de sangle (110) au deuxième élément de raccordement (104).

5. Système absorbeur d'énergie selon la revendication 1, comprenant en outre :
le premier élément de raccordement (102) ayant une première ouverture de raccordement (103), la première partie d'extrémité (110a) de la première bande de sangle (110) et la deuxième partie d'extrémité (120b) de la deuxième bande de sangle (120) passant à travers la première ouverture de raccordement du premier élément de raccordement ; et
le deuxième élément de raccordement (104) ayant une deuxième ouverture de raccordement (106), la deuxième partie d'extrémité (110b) de la première bande de sangle (110) et la première partie d'extrémité (120a) de la deuxième bande de sangle (120) passant à travers la deuxième ouverture de raccordement du deuxième élément de raccordement.

6. Système absorbeur d'énergie selon la revendication 1, dans lequel les premier et deuxième éléments de raccordement (102, 104) sont des crochets d'emboîtement.

7. Absorbeur d'énergie selon la revendication 1, dans lequel les sections de résistance au déchirement de transition (227a, 227b) passent d'une résistance au déchirement plus élevée à une résistance au déchirement plus basse à mesure que les sections de résistance au déchirement de transition se rapprochent de la section non fixée située en position centrale (230).

8. Absorbeur d'énergie selon la revendication 1,la partie médiane (130) des première et deuxième bandes (110, 120) incluant en outre une paire de sections à augmentation progressive (225a, 225b) ayant un agencement de fils de déchirure qui produit des sections de résistance au déchirement de transition à proximité d'extrémités opposées de la partie médiane (130) des première et deuxième bandes de sangle.

9. Absorbeur d'énergie selon la revendication 8, dans lequel les sections de résistance au déchirement de transition (225a, 225b) passent d'une résistance au déchirement plus basse à une résistance au déchirement plus élevée.
